# EUROPÄISCHE PATENTSCHRIFT

(11) **EP 3 517 694 B1**
(45) Veröffentlichungstag und Bekanntmachung des Hinweises auf die Patenterteilung: **14.04.2021**
(21) Anmeldenummer: 19152060.0
(22) Anmeldetag: 16.01.2019
(51) Int. Cl.: E03C 1/06

(54) **AUSZUGSSCHLAUCHFÜHRUNGSVORRICHTUNG MIT FÜHRUNGSGEWICHTSROLLE UND SANITÄRBRAUSE**
PULL-OUT HOSE GUIDANCE DEVICE WITH GUIDE WEIGHT ROLLER AND SANITARY SHOWER
DISPOSITIF DE GUIDAGE DE FLEXIBLE EXTRACTIBLE POURVU DE ROULEAU CONTREPOIDS DE GUIDAGE ET DOUCHE SANITAIRE

(30) Priorität: 24.01.2018 DE 102018201078
(43) Veröffentlichungstag der Anmeldung: 31.07.2019
(73) Patentinhaber: Hansgrohe SE, 77761 Schiltach (DE)
(72) Erfinder: Melle, Fabian, 77770 Durbach (DE); Schorer, Jürgen, 77761 Schiltach (DE)
(74) Vertreter: Patentanwälte Ruff, Wilhelm, Beier, Dauster & Partner mbB

(56) Entgegenhaltungen:
- DE-A1-102015 226 412
- US-A- 2 118 294
- US-A- 5 775 354
- US-A1- 2016 237 661

## Beschreibung

Die Erfindung bezieht sich auf eine Auszugsschlauchführungsvorrichtung zur Führung eines Auszugsschlauchs mit wenigstens einem Schlauchbogen variabler Schlauchbogenlänge, wobei die Auszugsschlauchführungsvorrichtung eine Schlauchführungsbox, die zum verdrehgesicherten Aufnehmen des Schlauchbogens in einer boxeinwärts durchhängenden Lage eingerichtet ist, und eine Führungsgewichtsrollenanordnung mit wenigstens einer Führungsgewichtsrolle beinhaltet, die um eine Rollendrehachse drehbeweglich in einen Bogenumkehrbereich des Schlauchbogens einlegbar ist. Die Führungsgewichtsrolle ist mit ihrer Rollendrehachse in einer Schlauchbogenlängenrichtung mit abnehmender Schlauchbogenlänge boxauswärts und mit zunehmender Schlauchbogenlänge boxeinwärts translationsbeweglich. Weiter bezieht sich die Erfindung auf eine mit einer solchen Auszugsschlauchführungsvorrichtung ausgerüstete Sanitärbrause. Die Auszugsschlauchführungsvorrichtung ist beispielsweise zur Führung eines Auszugsschlauchs einer ausziehbaren Handbrause an einer Badewanne oder in einem Duschraum oder eines Auszugsschlauchs einer Küchenauszugsbrause verwendbar.

Die Auszugsschlauchführungsvorrichtung dient somit zur Führung eines Auszugsschlauchs, der einen oder mehrere Schlauchbögen beinhaltet, die in der Schlauchführungsbox in einer boxeinwärts durchhängenden Lage verdrehgesichert aufgenommen sind, d.h. die Schlauchbögen sind in der Schlauchführungsbox gegen Verdrehen gesichert. Zur verdrehgesicherten Führung des Auszugsschlauchs kann insbesondere eine entsprechende Dimensionierung der Schlauchführungsbox beitragen, die dafür sorgt, dass die freie Beweglichkeit der Schlauchbögen geeignet eingeschränkt wird, beispielsweise indem die Schlauchführungsbox so schmal gebaut ist, dass sich die Schlauchbögen darin nicht verdrehen bzw. verdrillen können. Der Auszugsschlauch kann an einem freien Schlauchende aus der Schlauchführungsbox herausgezogen werden, wobei sich der oder die Schlauchbögen entsprechend verkürzen, und danach wieder in die Schlauchführungsbox zurückbewegt bzw. eingezogen werden, wobei sich der oder die Schlauchbögen wieder entsprechend verlängern. Die jeweilige Führungsgewichtsrolle ist in den Bogenumkehrbereich des zugeordneten Schlauchbogens einlegbar, wobei sie sich beim Aus- bzw. Einziehen des Auszugsschlauchs um ihre Rollendrehachse dreht und sich samt dieser translatorisch bewegt, z.B. vertikal nach oben bzw. unten.

Die Führungsgewichtsrolle bildet auf diese Weise eine lose Rolle, die den Schlauchbogen im Bogenumkehrbereich führen und durch ihr Gewicht insgesamt stabilisieren kann, wobei sie sich mit ihrer Rollendrehachse beim Ausziehen des Auszugsschlauchs aufgrund der abnehmenden Schlauchbogenlänge in Boxauswärtsrichtung und beim einwärtigen Zurückbewegen des Auszugsschlauchs in die Schlauchführungsbox aufgrund der zunehmenden Schlauchbogenlänge in Boxeinwärtsrichtung bewegt. Mit den Begriffen Boxauswärtsrichtung und Boxeinwärtsrichtung sind folglich vorliegend die Richtungen zu verstehen, längs der sich die Schlauchbogenlänge beim Ausziehen des Auszugsschlauchs verringert bzw. beim Zurückbewegen des Auszugsschlauchs in die Schlauchführungsbox vergrößert. Dies entspricht häufig gleichzeitig der Richtung, in welcher der Auszugsschlauch aus der Schlauchführungsbox herausgezogen bzw. wieder in diese hineinbewegt wird. In einer typischen Gebrauchslage der Schlauchführungsbox entspricht die Boxauswärtsrichtung einer vertikal nach oben weisenden Richtung und die Boxeinwärtsrichtung einer vertikal nach unten weisenden Richtung, wobei unter vertikaler Richtung vorliegend nicht ausschließlich eine exakt vertikale Richtung gemeint ist, sondern auch eine Richtung, deren Hauptrichtungskomponente parallel zur Vertikalen ist, d.h. eine Richtung, die mit größerer Komponente in Richtung der Vertikalen als in Richtung der Horizontalen weist. Optional kann eine Rollenachsenführung vorgesehen sein, welche die Führungsgewichtsrolle mit ihrer Rollendrehachse in ihrer Translationsbewegung an der Schlauchführungsbox führt.

Auszugsschlauchführungsvorrichtungen dieser Art sind bereits verschiedentlich vorgeschlagen worden. So offenbart die Offenlegungsschrift DE 10 2015 226 412 A1 eine solche Auszugsschlauchführungsvorrichtung, bei der die Schlauchführungsbox an der Oberseite offen und dort mit einer Sicherungseinrichtung versehen ist, die ein Rollenanschlagelement beinhaltet, das die Führungsgewichtsrolle gegen eine Überschreitung einer vorgegebenen oberen bzw. boxauswärtigen Endstellung und damit gegen ein unbeabsichtigtes Herausgelangen aus der Schlauchführungsbox sichert.

Die Patentschrift US 2.118.294 offenbart eine Auszugsschlauchführungsvorrichtung zur Führung zweier Auszugsschläuche mit je einem nach unten hängenden Schlauchbogen in einer gemeinsamen Schlauchführungsbox.

Die Gebrauchsmusterschrift DE 20 2005 019 492 U1 offenbart Auszugsschlauchführungsvorrichtungen zur Führung eines einzigen, nach unten hängenden Schlauchbogens sowie in einer alternativen Ausführung zur Führung mehrer horizontaler Schlauchbögen eines Auszugsschlauchs in einer horizontalen Flaschenzuganordnung.

Die Patentschriften AT 193 320 und US 1.318.217 offenbaren Auszugsschlauchführungsvorrichtungen mit einer vertikalen Flaschenzugkonfiguration zur Führung mehrerer nach unten hängender Schlauchbögen eines Auszugsschlauchs. Bei dieser Konfiguration sind die losen, unteren Rollen in die Bogenumkehrbereiche der Schlauchbögen eingelegt und querversetzt nebeneinander auf einer gemeinsamen Drehlagereinheit um eine gemeinsame Rollendrehachse unabhängig voneinander drehbar angeordnet.

In der älteren deutschen Patentanmeldung 10 2017 200 327.8 ist eine Auszugsschlauchführungsvorrichtung der eingangs genannten Art offenbart, die zur Führung eines Auszugsschlauchs mit mehreren Schlauchbögen eingerichtet ist und dementsprechend wenigstens zwei Führungsgewichtsrollen aufweist. Die Führungsgewichtsrollen sind mit zu wenigstens einer ihrer Drehachsen paralleler Versatzrichtungskomponente versetzt angeordnet. Die Schlauchführungsbox weist in ihrem oberen Boxbereich zur Schlauchumlenkung jeweils zwischen zwei der nach unten hängenden Schlauchbögen wenigstens ein Schlauchumlenkelement in Form eines an der Schlauchführungsbox unbewegt angeordneten Gleitbogenelements auf. Die Schlauchführungsbox kann eine Vertikalführung für die Führungsgewichtsrollen aufweisen.

Der Erfindung liegt als technisches Problem die Bereitstellung einer Auszugsschlauchführungsvorrichtung der eingangs genannten Art, die gegenüber dem oben erwähnten Stand der Technik insbesondere hinsichtlich der Translationsbewegungscharakteristik der einen oder mehreren Führungsgewichtsrollen vorteilhafte Eigenschaften besitzt, sowie einer damit ausgerüsteten Sanitärbrause zugrunde.

Die Erfindung löst dieses Problem durch die Bereitstellung einer Auszugsschlauchführungsvorrichtung mit den Merkmalen des Anspruchs 1 sowie einer Sanitärbrause mit den Merkmalen des Anspruchs 10.

Die erfindungsgemäße Auszugsschlauchführungsvorrichtung beinhaltet eine Rollenblockiereinrichtung, die in einem Rollenfreigabezustand die Führungsgewichtsrolle in ihrer Translationsbewegung freigibt und in einem Rollenblockierzustand die Führungsgewichtsrolle gegen Weiterbewegen wenigstens in Boxauswärtsrichtung über eine Rollenblockierstellung hinaus sperrt, wobei die Rollenblockierstellung von einer boxauswärtigen Endlage der Führungsgewichtsrolle, die mit einer minimalen Schlauchbogenlänge korrespondiert, boxeinwärts beabstandet ist.

Mit anderen Worten kann bei der erfindungsgemäßen Auszugsschlauchführungsvorrichtung durch die Rollenblockiereinrichtung die mindestens eine Führungsgewichtsrolle in der Rollenblockierstellung vor Erreichen der boxauswärtigen Endlage festgehalten werden, wobei die boxauswärtige Endlage diejenige Lage bezeichnet, welche die Führungsgewichtsrolle bei freigegebener Translationsbewegung einnimmt, wenn der Auszugsschlauch maximal aus der Schlauchführungsbox ausgezogen ist und daher die Länge des Schlauchbogens in der Schlauchführungsbox minimal ist.

Diese Fähigkeit der erfindungsgemäßen Auszugsschlauchführungsvorrichtung, die eine oder mehreren Führungsgewichtsrollen mittels der Rollenblockiereinrichtung bei Bedarf gegen ein Weiterbewegen über die Rollenblockierstellung hinaus in Boxauswärtsrichtung sperren zu können, lässt sich vorteilhaft nutzen, insbesondere in Handhabungssituationen, bei denen die Schlauchführungsbox z.B. für Wartungs- oder Reinigungszwecke von ihrem bestimmungsgemäßen Gebrauchs-/Einsatzort demontiert wird.

Wenn die Schlauchführungsbox z.B. in einer vorteilhaften Verwendung in einem in Gebrauchslage unteren Bereich geschlossen bzw. fluiddicht ausgeführt ist und als Sammelbehälter für etwaiges Leckagefluid fungiert, kann es von Zeit zu Zeit erforderlich sein, die Schlauchführungsbox von gesammeltem Leckagefluid zu leeren. Dies kann grundsätzlich in einfacher Weise dadurch erfolgen, dass die Schlauchführungsbox von ihrem Gebrauchsort abgenommen und anschließend zum Ausleeren des Leckagefluids gekippt wird, so dass das Leckagefluid in einem oberen, offenen Bereich der Schlauchführungsbox, der dann eine nach unten gekippte Lage einnimmt, aus der Schlauchführungsbox austreten kann. Die Rollenblockiereinrichtung verhindert in dieser Situation, dass sich die jeweilige Führungsgewichtsrolle ungebremst aus dem Bogenumkehrbereich des zugehörigen Schlauchbogens heraus nach unten in Boxauswärtsrichtung bis zur boxauswärtigen Endlage, falls diese anschlagsbegrenzt definiert ist, oder gar vollständig aus der Schlauchführungsbox hinaus bewegen kann. Entsprechend können auf diese Weise etwaige Schädigungen durch die herabfallende Führungsgewichtsrolle und ein erforderliches Wiedereinsetzen der Führungsgewichtsrolle in den Bogenumkehrbereich des zugeordneten Schlauchbogens vermieden werden.

Das Sperren der jeweiligen Führungsgewichtsrolle gegen Weiterbewegen in Boxauswärtsrichtung durch die Rollenblockiereinrichtung kann aber auch für anderweitige Wartungszwecke von Vorteil sein, z.B. wenn Wartungsarbeiten an einer typischerweise in Boxauswärtsrichtung gelegenen Seite der Schlauchführungsbox erforderlich sind, bei denen es günstig ist, die Schlauchführungsbox hierfür um 90° oder mehr zu kippen. Es wird dann auch für einen solchen Fall verhindert, dass sich die eine oder mehreren Führungsgewichtsrollen unerwünscht aus dem Bogenumkehrbereich ihres zugeordneten Schlauchbogens heraus bis in den Bereich dieser Bedienseite bewegen und dort stören oder sogar ganz aus der Box herausfallen und dass sie anschließend wieder in den betreffenden Bogenumkehrbereich des Schlauchbogens zurückgebracht werden müssen.

In einer Weiterbildung der Erfindung ist die Rollenblockierstellung eine boxeinwärtige Endlage der Führungsgewichtsrolle, die mit einer maximalen Schlauchbogenlänge bei vollständig in die Schlauchführungsbox zurückbewegtem Auszugsschlauch korrespondiert, oder die Rollenblockierstellung liegt jedenfalls näher an dieser boxeinwärtigen Endlage als an der boxauswärtigen Endlage. Diese Maßnahme hat den Vorteil, dass die jeweilige Führungsgewichtsrolle direkt in ihrer boxeinwärtigen Endlage oder alternativ an einer jedenfalls noch relativ weit im Inneren der Schlauchführungsbox liegenden Stelle festgehalten bzw. wenigstens gegen Weiterbewegung in Boxauswärtsrichtung gesperrt werden kann, wobei diese Stelle insbesondere näher an der boxeinwärtigen Endlage als an der boxauswärtigen Endlage liegt. Folglich kann sich die Führungsgewichtsrolle selbst in einer Situation, in welcher der Auszugsschlauch vollständig eingezogen ist und sich die Führungsgewichtsrolle daher in ihrer boxeinwärtigen Endlage befindet, nicht oder nicht sehr weit bewegen, wenn sie durch die Rollenblockiereinrichtung gegen ein Weiterbewegen über die Rollenblockierstellung hinaus gesperrt wird, selbst wenn die Schlauchführungsbox z.B. zwecks Entleerung von Leckagefluid gekippt wird.

In einer Weiterbildung der Erfindung weist die Rollenblockiereinrichtung einen Blockierbügel auf, der einerseits mit der Rollendrehachse translationsfest gekoppelt ist, d.h. sich mit der Translationsbewegung der Rollendrehachse mitbewegt, und andererseits einen Bügelabschnitt zum unterseitigen Hintergreifen des Schlauchbogens in seinem Bogenumkehrbereich beinhaltet. Durch diesen Blockierbügel kann folglich die Führungsgewichtsrolle am Schlauchbogen in dessen Bogenumkehrbereich festgehalten werden, so dass sie sich nicht von diesem Bogenumkehrbereich wegbewegen kann, selbst wenn beispielsweise die Schlauchführungsbox gekippt wird. Es versteht sich, dass dies insbesondere für solche Anwendungen eine brauchbare Realisierung der Rollenblockiereinrichtung darstellt, bei denen der Schlauchbogen auch beim Kippen der Schlauchführungsbox ausreichend lage-/formstabil bleibt, sei es durch ausreichend hohe Biegefestigkeit des Schlauchmaterials und/oder dadurch, dass sich der Schlauchbogen seitlich an der Schlauchführungsbox abstützt.

Die so realisierte Rollenblockiereinrichtung ist folglich in der Lage, die Führungsgewichtsrolle in jeder beliebigen aktuellen Position zwischen ihrer boxeinwärtigen und ihrer boxauswärtigen Endlage festzuhalten, in der sie sich momentan befindet, wenn die Rollenblockiereinrichtung die Rollenblockierstellung aktiviert. Letzteres geschieht bei dieser Realisierung der Rollenblockiereinrichtung selbsttätig durch das Verkippen der Schlauchführungsbox. Denn dieses Verkippen bewirkt, dass sich der Blockierbügel mit seinem Bügelabschnitt aufgrund seines Eigengewichts und des Gewichts der Führungsgewichtsrolle von oben auf den entsprechend gekippten Bogenumkehrbereich des Schlauchbogens legt, was die Führungsgewichtsrolle daran hindert, sich nach unten aus dem Bogenumkehrbereich des Schlauchbogens zu entfernen. Hingegen legt sich die Führungsgewichtsrolle, wenn sich die Schlauchführungsbox in ihrer Gebrauchslage befindet, mit ihrem Rollenumfang gegen den Bogenumkehrbereich des Schlauchbogens an, ohne dass der Bügelabschnitt des Blockierbügels auf den Bogenumkehrbereich drückt, so dass sich beim Aus- und Einziehen des Schlauchs die Führungsgewichtsrolle im Bogenumkehrbereich des Schlauchbogens drehen und sich mit ihrer Rollendrehachse translatorisch z.B. nach oben bzw. unten bewegen kann.

In einer Ausgestaltung der Erfindung beinhaltet die Auszugsschlauchvorrichtung eine Mehrzahl von Führungsgewichtsrollen für eine entsprechende Mehrzahl von Schlauchbögen des Auszugsschlauchs, und der Blockierbügel ist mit seinem Bügelabschnitt zum unterseitigen Hintergreifen mehrerer der Schlauchbögen in deren Bogenumkehrbereich eingerichtet. Dies können alle oder nur ein Teil aller Schlauchbögen sein. Der Blockierbügel kann sich in diesem Fall an mehreren Schlauchbögen abstützen, um die Führungsgewichtsrollen in ihrer Rollenblockierstellung in den Bogenumkehrbereichen der Schlauchbögen zu halten.

In einer weiteren Ausgestaltung der Erfindung ist für mindestens zwei der Führungsgewichtsrollen eine gemeinsame Drehlagereinheit vorgesehen, und der Blockierbügel beinhaltet einen mit einem Endbereich an die Drehlagereinheit gekoppelten Mittelstegabschnitt, der sich zwischen zwei dieser mindestens zwei Führungsgewichtsrollen erstreckt. Als Bügelabschnitt beinhaltet der Blockierbügel in diesem Fall am anderen Endbereich des Mittelstegabschnitts entgegengesetzt abstehende Bügelteilabschnitte. Mit dem so gestalteten Blockierbügel lassen sich die Führungsgewichtsrollen sicher und gleichmäßig in ihrer Rollenblockierstellung in den Bogenumkehrbereichen der Schlauchbögen halten, wobei sich jeder der Bügelteilabschnitte an einem oder mehreren Bogenumkehrbereichen der Schlauchbögen abstützen kann.

In einer Weiterbildung der Erfindung weist die Rollenblockiereinrichtung einen schwenkbeweglichen Schwenkhebel auf, der sich von einem boxauswärtigen Betätigungsende an einer Bedienseite der Schlauchführungsbox zu einem boxeinwärtigen Blockierabschnitt erstreckt und zwischen einer Blockierelement-Freigabestellung und einer Blockierelement-Blockierstellung schwenkbeweglich ist. Dabei greift der Schwenkhebel in der Blockierelement-Blockierstellung mit seinem Blockierabschnitt blockierend in einen Rollendrehachsen-Führungsweg der Führungsgewichtsrolle ein. Hierbei bezeichnet der Rollendrehachsen-Führungsweg eine geführte Wegstrecke, entlang der sich die Rollendrehachse translatorisch zwischen der boxeinwärtigen und der boxauswärtigen Endlage der Führungsgewichtsrolle bewegen kann. Dieser Rollendrehachsen-Führungsweg kann beispielsweise von einer Rollenachsenführung gebildet sein, welche die Führungsgewichtsrolle mit ihrer Rollendrehachse translationsbeweglich an der Schlauchführungsbox führt, z.B. mit Hilfe einer Führungsnut oder einer anderen Kulissenführungsbahn.

Da sich der Schwenkhebel bis zu einer Bedienseite der Schlauchführungsbox erstreckt und dort ein boxauswärtiges Betätigungsende aufweist, kann er vom Benutzer sehr einfach betätigt werden, um ihn zwischen seiner Freigabestellung und seiner Blockierstellung zu verschwenken und dadurch die Rollenblockierstellung für die Führungsgewichtsrolle zu aktivieren oder zu deaktivieren. Bei dieser Realisierung der Rollenblockiereinrichtung ist durch die Lage des Blockierabschnitts des Schwenkhebels die Rollenblockierstellung definiert, in der die Führungsgewichtsrolle gegen Weiterbewegen in Boxauswärtsrichtung gesperrt werden kann. In vorteilhaften Ausführungen liegt dieser Blockierabschnitt und folglich die Rollenblockierstellung in oder in der Nähe der boxeinwärtigen Endlage der Führungsgewichtsrolle.

Optional kann der Schwenkhebel an seinem boxauswärtigen Betätigungsende ein lösbares Demontage-Verriegelungselement für die Schlauchführungsbox aufweisen, das gegen ein unbeabsichtigtes Demontieren der Schlauchführungsbox von ihrer Gebrauchslage sichert. Dies eignet sich z.B. für Ausführungen, bei denen die Schlauchführungsbox ein Boxgehäuse zum Aufnehmen des Auszugsschlauchs und einen Boxhalterahmen aufweist, an dem das Boxgehäuse abnehmbar angebracht ist und der seinerseits an einem gewünschten Einsatzort montiert werden kann, z.B. an einer Badewannenverkleidung oder einer Wand eines Duschraums oder einem Küchenspülenunterbau.

In einer Weiterbildung der Erfindung weist die Rollenblockiereinrichtung einen drehbeweglichen Gewindesteuerstab und ein von diesem zwischen einer Blockierelement-Freigabestellung und einer Blockierelement-Blockierstellung bewegbares Blockierelement auf, wobei sich der Gewindersteuerstab von einem boxauswärtigen Betätigungsende an einer Bedienseite der Schlauchführungsbox zu einem bedieneinwärtigen Gewindeabschnitt erstreckt und das Blockierelement mit dem boxeinwärtigen Gewindeabschnitt des Gewindesteuerstabs zusammenwirkt. In dieser Realisierung der Rollenblockiereinrichtung kann der Gewindesteuerstab an der Bedienseite der Schlauchführungsbox drehbetätigt werden, wodurch das Blockierelement zwischen seiner Freigabestellung und seiner Blockierstellung bewegt werden kann. In seiner Freigabestellung gibt das Blockierelement die Führungsgewichtsrolle in ihrer Translationsbewegung frei, während es in seiner Blockierstellung die Rollenblockierstellung für die Führungsgewichtsrolle aktiviert.

In einer Ausgestaltung der Erfindung weist das Blockierelement einen Blockierbolzen auf, der in der Blockierelement-Blockierstellung blockierend in einen Rollendrehachsen-Führungsweg der Führungsgewichtsrolle eingreift. Auch hier kann der Rollendrehachsen-Führungsweg z.B. von einer Rollenachsenführung gebildet sein, welche die Führungsgewichtsrolle mit ihrer Rollendrehachse translationsbeweglich an der Schlauchführungsbox führt. Dazu kann das Zusammenwirken des Blockierbolzens und des Gewindersteuerstabs beispielsweise derart realisiert sein, dass sich der Blockierbolzen bei Drehung des Gewindesteuerstabs translatorisch quer zur Längsachse des Gewindesteuerstabs bzw. zur Translationsbewegungsrichtung der Führungsgewichtsrolle bewegt.

In einer alternativen Ausgestaltung der Erfindung weist das Blockierelement einen Blockierklotz auf, der sich in der Blockierelement-Blockierstellung blockierend gegen eine Rollenfläche der Führungsgewichtsrolle anlegt. In dieser Realisierung beinhaltet die Aktivierung der Rollenblockierstellung für die Führungsgewichtsrolle folglich ein Festhalten der Führungsgewichtsrolle durch das blockierende Anliegen des Blockierklotzes gegen die Rollenfläche. Dazu kann das Zusammenwirken des Blockierklotzes und des Gewindesteuerstabs z.B. dergestalt realisiert sein, dass sich bei Drehung des Gewindesteuerstabs der Blockierklotz quer zum Gewindesteuerstab bewegt. Optional kann der Blockierklotz aus zwei über eine Schrägflächenkopplung zusammenwirkenden Klotzplatten aufgebaut sein, von denen die eine an den Gewindesteuerstab angekoppelt ist und bei Drehung des Gewindesteuerstabs entlang der Schrägflächenkopplung gleitet, wodurch die andere Klotzplatte gegen die Rollenfläche der Führungsgewichtsrolle angedrückt wird.

In beiden alternativen Ausgestaltungen des Blockierelements als Blockierbolzen oder als Blockerklotz kann die Führungsgewichtsrolle an der Stelle blockiert bzw. gegen Weiterbewegen in Boxauswärtsrichtung gesperrt werden, an der sich der Blockierbolzen bzw. der Blockierklotz befindet. Vorzugsweise entspricht dies wiederum der boxeinwärtigen Endlage der Führungsgewichtsrolle oder einer nicht weit davon entfernten Position der Führungsgewichtsrolle.

In einer Weiterbildung der Erfindung weist die Rollenblockiereinrichtung einen axialbeweglichen Steuerstab und ein von diesem zwischen einer Blockierelement-Freigabestellung und einer Blockierelement-Blockierstellung bewegbares Blockierelement auf, wobei sich der Steuerstab von einem boxauswärtigen Betätigungsende an einer Bedienseite der Schlauchführungsbox zu einem boxeinwärtigen Steuerabschnitt erstreckt und das Blockierelement mit dem boxeinwärtigen Steuerabschnitt des Steuerstabs zusammenwirkt und in der Blockierelement-Blockierstellung blockierend in einen Rollendrehachsen-Führungsweg der Führungsgewichtsrolle eingreift. Der Steuerstab kann an seinem boxauswärtigen Betätigungsende an der Bedienseite der Schlauchführungsbox von einem Benutzer betätigt, d.h. axial bewegt, werden, wodurch der Benutzer die Rollenblockierstellung für die Führungsgewichtsrolle aktivieren bzw. deaktivieren kann.

Wiederum kann der Rollendrehachsen-Führungsweg z.B. von einer Rollenachsenführung gebildet sein, welche die Führungsgewichtsrolle mit ihrer Rollendrehachse translationsbeweglich an der Schlauchführungsbox führt. Zudem kann auch hier das Blockierelement so positioniert sein, dass die Rollenblockierstellung für die Führungsgewichtsrolle deren boxeinwärtiger Endlage entspricht oder nicht weit von dieser entfernt ist. In einer vorteilhaften Ausgestaltung kann das Blockierelement federelastisch beweglich sein und so angeordnet sein, dass es in die Blockierelement-Blockierstellung vorgespannt an der Schlauchführungsbox gehalten ist und durch die Axialbewegung des Steuerstabs entgegen der elastischen Vorspannkraft in die Blockierelement-Freigabestellung bewegt werden kann.

Die erfindungsgemäße Sanitärbrause umfasst eine Brausekopfeinheit und einen Auszugsschlauch, an den die Brausekopfeinheit angekoppelt ist, sowie eine erfindungsgemäße Auszugsschlauchführungsvorrichtung zur Führung des Auszugsschlauchs. Die Sanitärbrause kann beispielsweise als Handbrause für eine Badewanne oder einen Duschraum oder als Küchenauszugsbrause realisiert sein.

Vorteilhafte Ausführungsformen der Erfindung sind in den Zeichnungen dargestellt. Diese und weitere vorteilhafte Ausführungsformen der Erfindung werden nachfolgend detaillierter beschrieben. Hierbei zeigen:
- Fig. 1: eine perspektivische Längsschnittansicht einer Brause mit Brausekopfeinheit, Auszugsschlauch und Auszugsschlauchführungsvorrichtung mit Rollenblockiereinrichtung,
- Fig.2: eine Perspektivansicht einer Blockierbügel-Drehlager-Baueinheit der Auszugsschlauchführungsvorrichtung von Fig. 1,
- Fig. 3: eine Detailansicht eines unteren Bereichs von Fig. 1,
- Fig. 4: eine Längsschnittansicht der Auszugsschlauchführungsvorrichtung mit Auszugsschlauch von Fig. 1,
- Fig. 5: eine Detailansicht eines unteren Bereichs von Fig. 4,
- Fig. 6: eine Schnittansicht längs einer Linie VI-VI von Fig. 4,
- Fig. 7: eine Längsschnittansicht einer Brause ähnlich Fig. 1 mit einer Rollenblockiereinrichtung mit schwenkbeweglichem Schwenkhebel in einem Rollenfreigabezustand,
- Fig. 8: die Schnittansicht von Fig. 7 mit der Rollenblockiereinrichtung in einer Rollenblockierstellung,
- Fig. 9: eine Längsschnittansicht einer Auszugsschlauchführungsvorrichtung ähnlich denjenigen der Fig. 1 bis 8 mit einer Rollenblockiereinrichtung mit drehbeweglichem Gewindesteuerstab und Blockierbolzen,
- Fig. 10: eine Längsschnittansicht einer Auszugsschlauchführungsvorrichtung ähnlich Fig. 9 mit einer Rollenblockiereinrichtung mit Gewindersteuerstab und Blockierklotz,
- Fig. 11: eine Längsschnittansicht einer Auszugsschlauchführungsvorrichtung ähnlich den Fig. 9 und 10 mit einer Rollenblockiereinrichtung mit axialbeweglichem Steuerstab,
- Fig. 12: eine Perspektivansicht eines Wannenverkleidungsbereichs von innen mit daran montierter Brause gemäß Fig. 1 und
- Fig. 13: eine Perspektivansicht des Wannenverkleidungsbereichs der Fig. 12 mit der daran montierten Brause von außen.

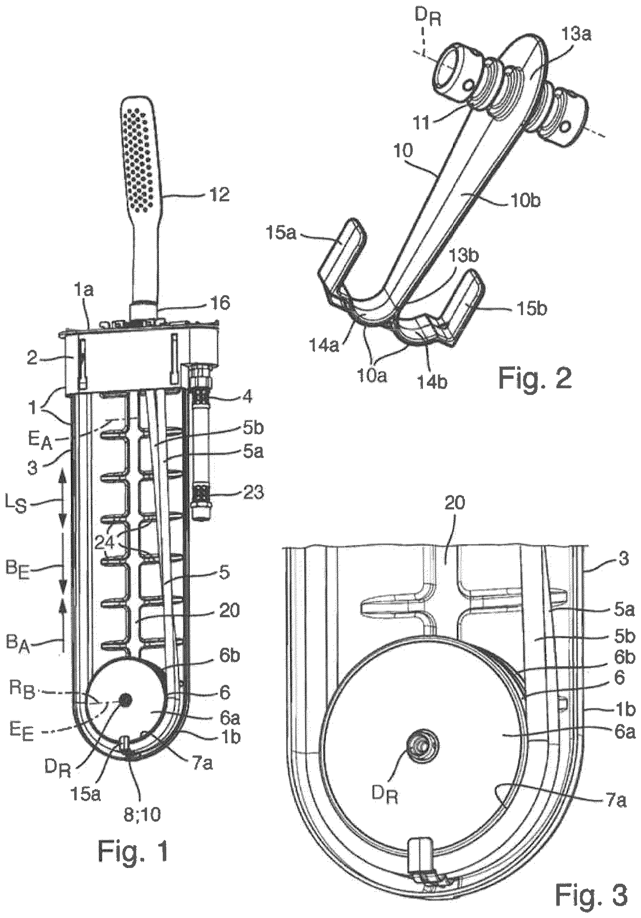

Die in den Figuren dargestellte Brause beinhaltet eine Auszugsschlauchvorrichtung, die einen Auszugsschlauch 5 mit wenigstens einem Schlauchbogen 5a variabler Schlauchbogenlänge sowie eine Auszugsschlauchführungsvorrichtung zur Führung des Auszugsschlauchs 5 umfasst. Im gezeigten Ausführungsbeispiel beinhaltet der Auszugsschlauch 5 zwei Schlauchbögen 5a, 5b, in alternativen Ausführungen umfasst er nur einen oder drei oder mehr Schlauchbögen. Die Auszugsschlauchführungsvorrichtung beinhaltet eine Schlauchführungsbox 1, die zum verdrehgesicherten Aufnehmen des jeweiligen Schlauchbogens 5a, 5b in einer boxeinwärts durchhängenden Lage eingerichtet ist. In der Ansicht von Fig. 1 weist eine entsprechende Boxeinwärtsrichtung B_{E} nach unten.

In entsprechenden Ausführungen umfasst die Schlauchführungsbox 1 wie gezeigt einen Boxhalterahmen 2 und ein Boxgehäuse 3, das an dem Boxhalterahmen 2 lösbar angebracht werden kann, z.B. durch Einsetzen von oben in den Boxhalterahmen 2. Das Boxgehäuse 3 kann dann bei Bedarf wieder nach oben aus dem Boxhalterahmen 2 herausgenommen werden. In alternativen Ausführungen ist die Schlauchführungsbox in anderer Weise aufgebaut, z.B. mit einem einteiligen Gehäuseaufbau ohne separaten Boxhalterahmen.

Die Auszugsschlauchführungsvorrichtung beinhaltet des Weiteren eine Führungsgewichtsrollenanordnung 6 mit wenigstens einer Führungsgewichtsrolle 6a, die um eine Rollendrehachse D_{R} drehbeweglich in einen Bogenumkehrbereich 7a des Schlauchbogens 5a einlegbar ist. Dabei ist die Führungsgewichtsrolle 6a mit ihrer Rollendrehachse D_{R} in einer Schlauchbogenlängenrichtung L_{S} mit abnehmender Schlauchbogenlänge boxauswärts und mit zunehmender Schlauchbogenlänge boxeinwärts translationsbeweglich, wobei eine entsprechende Boxauswärtsrichtung B_{A} zur Boxeinwärtsrichtung B_{E} entgegengesetzt ist und aus der Schlauchführungsbox 1 hinausweist, in Fig. 1 nach oben.

Allgemein beinhaltet die Führungsgewichtsrollenanordnung 6 je eine Führungsgewichtsrolle für jeden Schlauchbogen, im gezeigten Beispiel folglich zwei Führungsgewichtsrollen 6a, 6b für die beiden Schlauchbögen 5a, 5b. Bei der Führungsgewichtsrollenanordnung 6 kann es sich insbesondere um eine solche handeln, wie sie in der oben erwähnten älteren deutschen Patentanmeldung 10 2017 200 327 beschrieben ist, worauf vorliegend für weitere diesbezügliche Details zusätzlich verwiesen werden kann. Die Führungsgewichtsrollenanordnung 6 unterstützt zusammen mit der an die Abmessung des oder der Schlauchbögen 5a, 5b angepassten Dimensionierung der Schlauchführungsbox 1 ein verdrehgesichertes Aufnehmen der Schlauchbögen 5a, 5b und kann zusätzlich aufgrund des Eigengewichts der Führungsgewichtsrollen 6a, 6b ein Zurückbringen des ausgezogenen Auszugsschlauchs 5 in die Schlauchführungsbox 1 unterstützen.

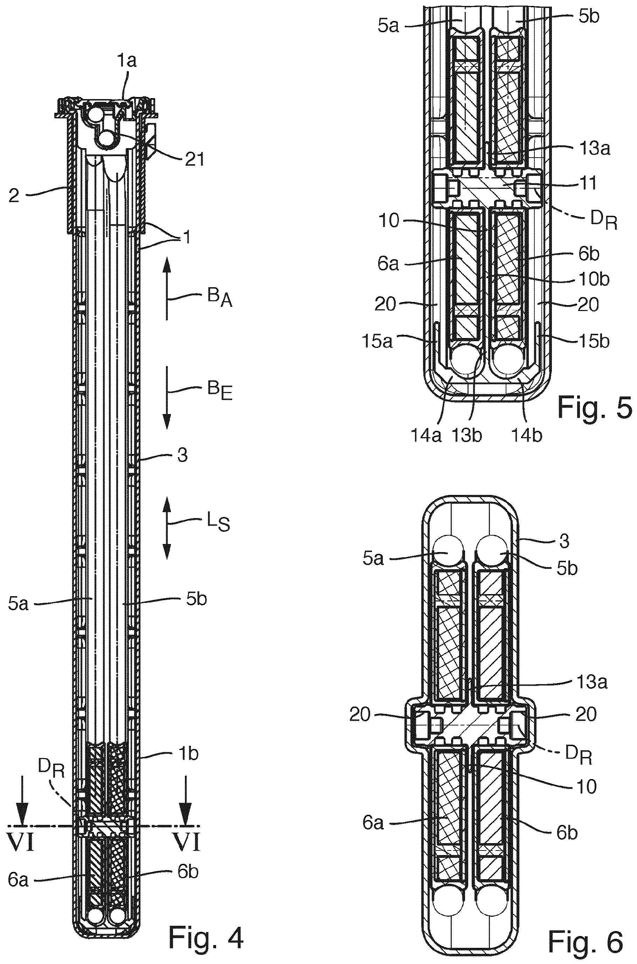

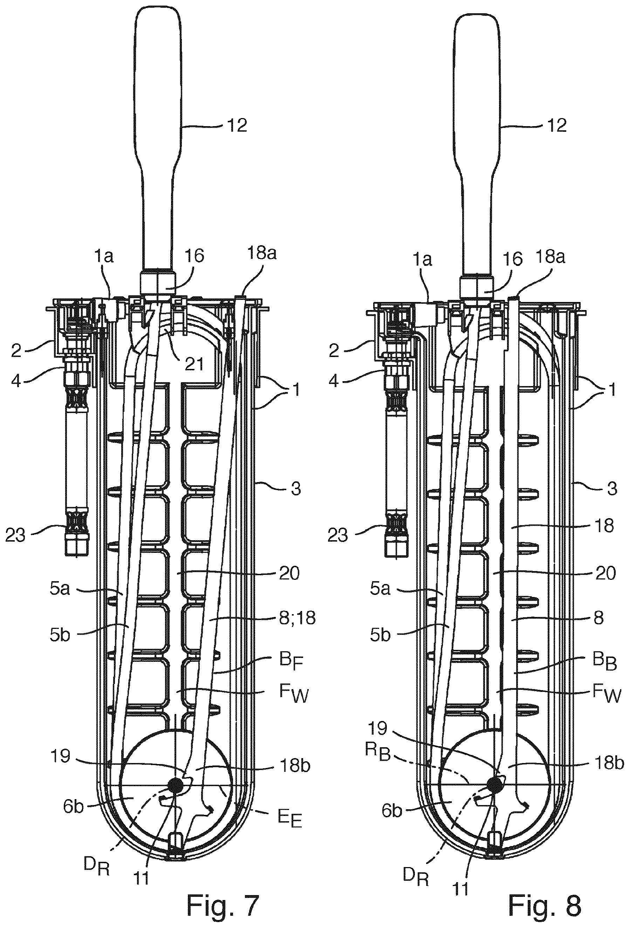

Die Führungsgewichtsrollen 6a, 6b fungieren als lose Rollen, die in entsprechenden Ausführungen der Auszugsschlauchvorrichtung in Einbaulage vertikal translationsbeweglich sind, wozu ihre Drehachse D_{R} entsprechend vertikal beweglich in einer Vertikalführung 20 an der Innenseite des Boxgehäuses 3 geführt ist. Im gezeigten Beispiel haben die beiden Führungsgewichtsrollen 6a, 6b eine gemeinsame Drehachse D_{R}, in alternativen Ausführungen sind sie mit nicht zusammenfallenden Drehachsen angeordnet. Für die obere Schlauchumlenkung zwischen den beiden gezeigten Schlauchbögen 5a, 5b dient ein an der Schlauchführungsbox 1 unbewegt angeordnetes Gleitbogenelement 21, wie es z.B. in den Fig. 4 und 7 zu erkennen ist.

Des Weiteren weist die Auszugsschlauchführungsvorrichtung eine Rollenblockiereinrichtung 8 auf, die in einem Rollenfreigabezustand die jeweilige Führungsgewichtsrolle 6a, 6b in ihrer Translationsbewegung freigibt und in einem Rollenblockierzustand die Führungsgewichtsrolle 6a, 6b gegen Weiterbewegen wenigstens in Boxauswärtsrichtung B_{A} über eine Rollenblockierstellung R_{B} hinaus sperrt. Dabei ist die Rollenblockierstellung R_{B} boxeinwärts von einer boxauswärtigen Endlage E_{A} der Führungsgewichtsrolle 6a, 6b beabstandet. Die boxauswärtige Endlage E_{A} ist hierbei diejenige Position, welche die Führungsgewichtsrolle 6a, 6b einnimmt, wenn der zugehörige Schlauchbogen 5a, 5b durch maximales Ausziehen des Auszugsschlauchs 5 seine minimale Länge hat, d.h. in Fig. 1 eine obere Endlage. In Fig. 1 ist die Auszugsschlauchvorrichtung mit vollständig in die Schlauchführungsbox 1 eingefahrenem Auszugsschlauch 5 gezeigt, so dass die Schlauchbögen 5a, 5b ihrer maximale Schlauchbogenlänge besitzen und sich die Führungsgewichtsrollen 6a, 6b in einer boxeinwärtigen Endlage E_{E} befinden, d.h. in Fig. 1 in einer unteren Endlage.

Die Brause, bei der es sich z.B. um eine Sanitärbrause handeln kann, umfasst des Weiteren eine Brausekopfeinheit 12, die an das ausziehbare Ende des Auszugsschlauchs 5 angekoppelt ist. Im gezeigten Beispiel beinhaltet die Schlauchführungsbox 1 eine optionale Halterung 16 zum abnehmbaren Halten der Brausekopfeinheit 12. An seinem anderen Ende mündet der Auszugsschlauch 5 in einen Fluidanschluss 4, der mit einem Anschlussstutzen 23 an eine Wasserversorgung oder eine andere Fluidversorgung angeschlossen werden kann. Dabei kann der Fluidanschluss 4 ganz oder teilweise an der Schlauchführungsbox 1 und speziell ganz oder teilweise am Boxgehäuse 3 und/oder am Boxhalterahmen 2 gehalten sein. In alternativen Anwendungen kann das ausziehbare Ende des Auszugsschlauchs 5 als Fluideinlass und der Anschlussstutzen 23 des Fluidanschlusses 4 als Fluidauslass der Auszugsschlauchvorrichtung dienen.

In entsprechenden Ausführungen der Auszugsschlauchvorrichtung ist, wie im gezeigten Beispiel, die Schlauchführungsbox 1 an einer Oberseite 1a offen und wenigstens in einem unteren Bereich 1b fluiddicht ausgeführt. Dadurch kann Fluid, das aufgrund einer Leckage oder als Spritzwasser oder aus anderem Grund in die Schlauchführungsbox 1 gelangt, im Boxgehäuse 3 mit seinem fluiddichten unteren Bereich 1b gesammelt werden. Die offene Oberseite 1a kann dazu genutzt werden, dort das herausziehbare Ende des Auszugsschlauchs 5 anzuordnen, d.h. den Auszugsschlauch 5 nach oben aus der Schlauchführungsbox 1 herausziehen zu können. Optional kann die offene Oberseite 1a der Schlauchführungsbox 1 und spezieller des Boxgehäuses 3 wie im gezeigten Beispiel durch eine abnehmbare Abdeckrosette 9 abgedeckt sein. In alternativen Ausführungen ist der Auszugsschlauch 5 an einer anderen Seite der Schlauchführungsbox 1 aus dieser herausziehbar, z.B. unten oder seitlich. Optional kann das Boxgehäuse 3 wie gezeigt mit einer Verstärkungsrippenstruktur 24 versehen sein. Das kann die Stabilität des Boxgehäuses 3 fördern und eine Fertigung desselben mit relativ geringem Gewicht begünstigen.

In entsprechenden Ausführungen der Auszugsschlauchvorrichtung ist, wie im gezeigten Beispiel, der jeweilige Schlauchbogen 5a, 5b U-förmig nach unten hängend mit variabler Länge in der Schlauchführungsbox 1 aufgenommen, und die Schlauchführungsbox 1 kann an ihrer Unterseite U-förmig verlaufen und/oder eine gegenüber seiner horizontalen Breite größere vertikale Länge aufweisen. Dies lässt eine entsprechend große Länge für die Schlauchbögen 5a, 5b in der Schlauchführungsbox 1 zu, kann ein seitliches Wegbewegen der Schlauchbögen 5a, 5b begrenzen und ermöglicht eine kompakte Bauweise der Schlauchführungsbox 1. In entsprechenden Ausführungen der Auszugsschlauchvorrichtung weist, wie im gezeigten Beispiel, die Schlauchführungsbox 1 eine gegenüber ihrer horizontalen Breite geringere horizontale Tiefe auf. Dies fördert ein verdrehgesichertes Aufnehmen der Schlauchbögen 5a, 5b.

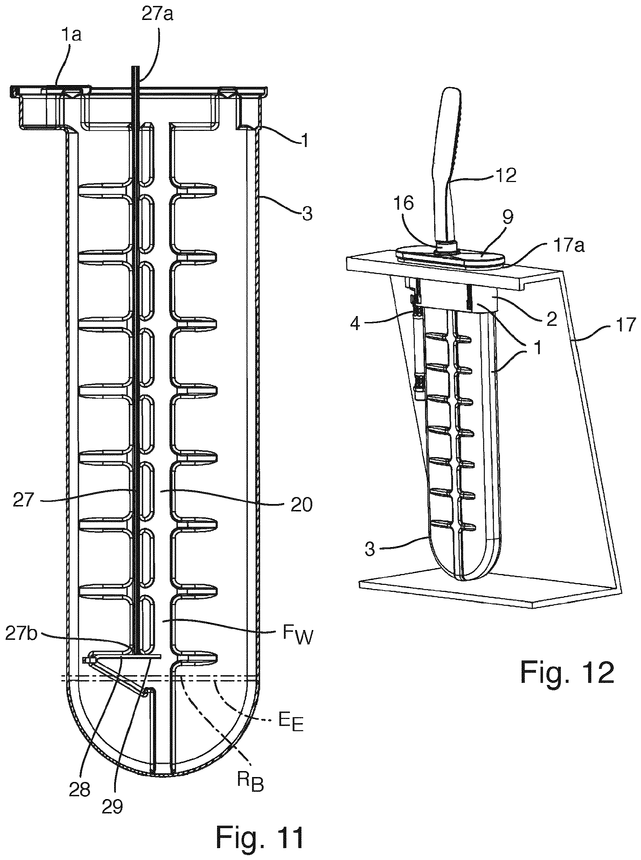

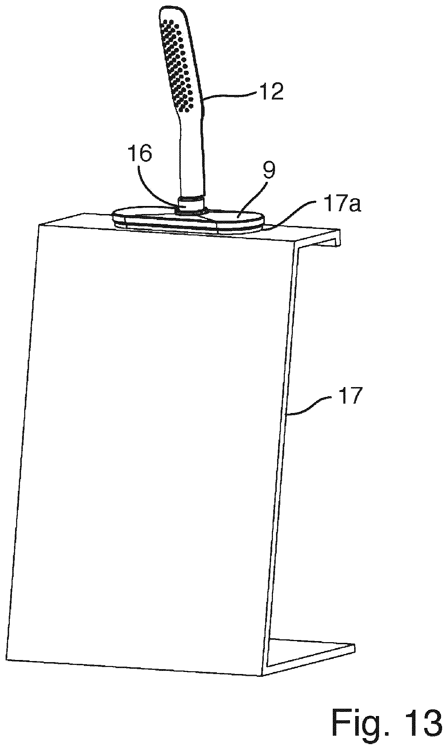

Im gezeigten Ausführungsbeispiel eignet sich die Brause beispielsweise als Badewannen-Handbrause, bei der die Auszugsschlauchvorrichtung z. B. verdeckt an der Innenseite einer zugeordneten Wannenverkleidung 17 angeordnet sein kann, wie in den Fig. 12 und 13 veranschaulicht. Im gezeigten Beispiel ist die Auszugsschlauchvorrichtung hierzu mit dem Boxhalterahmen 2 an der Wannenverkleidung 17 in einer korrespondierenden Öffnung eines Oberseitenbereichs 17a der Wannenverkleidung 17 gehalten. Dieser Oberseitenbereich der Wannenverkleidung 17 kann beispielsweise seitlich an einen Wannenrand der Badewanne anschließen. Die Brausekopfeinheit 12 kann zur Verwendung als Handbrause in der Badewanne nach oben aus der Schlauchführungsbox 1 herausgezogen werden. Nach Gebrauch kann sie wieder in ihre Halterung 16 an der Schlauchführungsbox 1 zurückgebracht werden. Die Rückkehrbewegung kann durch die Führungsgewichtsrollenanordnung 6 unterstützt werden, insbesondere durch das Gewicht der Führungsgewichtsrollen 6a, 6b.

In entsprechenden Ausführungsformen der Auszugsschlauchführungsvorrichtung ist die Rollenblockierstellung R_{B} mit der boxeinwärtigen Endlage E_{E} der Führungsgewichtsrolle 6a, 6b identisch, wie in Fig. 1 veranschaulicht. In alternativen Ausführungen liegt die Rollenblockierstellung R_{B} zwischen den beiden Endlagen E_{A}, E_{E} der Führungsgewichtsrolle 6a, 6b und hierbei vorzugsweise näher an der boxeinwärtigen Endlage E_{E} als an der boxauswärtigen Endlage E_{B}.

Die Rollenblockiereinrichtung 8 hat vor allem den Vorteil, dass die Führungsgewichtsrollen 6a, 6b nicht beliebig weit aus ihren Schlauchbögen 5a,5b herausfallen können, wenn die Schlauchführungsbox 1 gekippt wird, so dass dann ihr unterer Bereich 1b oben und ihre offene Oberseite 1a unten ist, beispielsweise während die Schlauchführungsbox 1 montiert oder demontiert wird oder zum Entleeren von gesammeltem Leckagefluid gekippt wird. Ohne die Rollenblockiereinrichtung könnten die Führungsgewichtsrollen 6a, 6b in diesem Fall aus dem jeweiligen Bogenumkehrbereich 7a, 7b der Schlauchbögen 5a, 5b heraus nach unten bis zu ihrer boxauswärtigen Endlage E_{A} fallen, falls letztere anschlagsbegrenzt definiert ist, oder gar ganz aus der Schlauchführungsbox 1 herausfallen, wenn dies nicht durch eine anderweitige Maßnahme verhindert ist. Die Rollenblockiereinrichtung 8 sorgt dafür, dass die Führungsgewichtsrollen 6a, 6b sich in einem solchen Fall nicht über die Rollenblockierstellung R_{B} hinaus in Boxauswärtsrichtung B_{A} wegbewegen können.

In einer entsprechenden Ausführungsform, wie sie in den Fig. 1 bis 6 gezeigt ist, weist die Rollenblockiereinrichtung 8 einen Blockierbügel 10 auf, der einerseits mit der Rollendrehachse D_{R} translationsfest gekoppelt ist und andererseits einen Bügelabschnitt 10a zum unterseitigen Hintergreifen des jeweiligen Schlauchbogens 5a, 5b in seinem Bogenumkehrbereich 7a, 7b aufweist. In entsprechenden Ausführungen mit einer Mehrzahl von Führungsgewichtsrollen 6a, 6b für eine entsprechende Mehrzahl von Schlauchbögen 5a, 5b, wie im gezeigten Beispiel, ist der Blockierbügel 10 mit seinem Bügelabschnitt 10a zum unterseitigen Hintergreifen mehrerer der Schlauchbögen 5a, 5b in deren jeweiligen Bogenumkehrbereich 7a, 7b eingerichtet. Dies können alle oder jedenfalls ein Teil der mehreren insgesamt vorhandenen Schlauchbögen 5a, 5b sein.

In entsprechenden Ausführungen ist wie beim gezeigten Ausführungsbeispiel für mindestens zwei der Führungsgewichtsrollen 6a, 6b eine gemeinsame Drehlagereinheit 11 vorgesehen, und der Blockierbügel 10 weist einen Mittelstegabschnitt 10b auf, der mit einem Endbereich 13a an die Drehlagereinheit 11 gekoppelt ist und sich zwischen zwei dieser mindestens zwei Führungsgewichtsrollen 6a, 6b erstreckt. Außerdem weist der Blockierbügel 10 in diesem Fall zwei am anderen Endbereich 13b des Mittelstegabschnitts 10b entgegengesetzt abstehende Bügelteilabschnitte 14a, 14b auf.

Optional ist, wie im gezeigten Beispiel, am Bügelabschnitt 10a bzw. an den Bügelteilabschnitten 14a, 14b ein Führungsfortsatz 15a, 15b vorgesehen, der zum einen zusammen mit dem Bügelabschnitt 10a und dem Mittelstegabschnitt 10b des Blockierbügels 10 eine U-förmige Führungshilfe für den darin hindurchgeführten zugehörigen Schlauchbogen 5a, 5b bildet und zum anderen als Drehsicherung für den Blockierbügel 10 dienen kann. Dazu greift der Führungsfortsatz 15a, 15b in die z.B. als Vertikalnut an der Innenwand des Boxgehäuses 3 gebildete Vertikalführung 20 ein, in der zudem die Führungsgewichtsrollen 6a, 6b in ihrer Translationsbewegung geführt sind, z.B. dadurch, dass die Drehlagereinheit 11 mit ihren Enden beidseits in je eine der an gegenüberliegenden Seitenwänden des Boxgehäuses 3 ausgebildeten Vertikalführungen 20 eingreift.

Die Drehlagereinheit 11 fungiert als gemeinsame Lagerung für die Führungsgewichtsrollen 6a, 6b und definiert deren gemeinsame Drehachse D_{R}. Vorzugsweise sind die Führungsgewichtsrollen 6a, 6b in Richtung der Drehachse D_{R} parallel versetzt nebeneinander angeordnet. Im gezeigten Beispiel sind die Führungsgewichtsrollen 6a, 6b zudem parallel zu Seitenwänden der Schlauchführungsbox 1 angeordnet, wie insbesondere aus den Fig. 5 und 6 zu erkennen, in alternativen Ausführungen sind sie schräg zu den Boxseitenwänden angeordnet. Im gezeigten Ausführungsbeispiel sind der Blockierbügel 10 und die Drehlagereinheit 11 durch ein entsprechendes Kombinationsbauteil gebildet, wie es aus Fig. 2 zu erkennen ist, alternativ kann der Haltebügel 10 in anderer Weise mit der Drehlagereinheit 11 translationsfest verbunden sein.

In dieser Blockierbügelrealisierung hat die Rollenblockiereinrichtung 8 die Eigenschaft, dass sie die Führungsgewichtsrollen 6a, 6b jeweils in ihrer momentanen Lage im Bogenumkehrbereich 7a, 7b der zugeordneten Schlauchbögen 5a, 5b festhält bzw. gegen Weiterbewegen in Boxauswärtsrichtung B_{A} sperrt, wenn die Rollenblockiereinrichtung 8 in ihren Rollenblockierzustand gelangt. In diesem Beispiel ist dies dann der Fall, wenn die Schlauchführungsbox 1 ausgehend von ihrer vertikalen Einsatzlage um mehr als 90° gekippt wird, so dass die Führungsgewichtsrollen 6a, 6b ohne Rollenblockiereinrichtung 8 nach unten aus den Schlauchbögen 5a, 5b herausfallen könnten. Dies verhindert der Blockierbügel 10 in jeder beliebigen vertikalen Lage der Führungsgewichtsrollen 6a, 6b, d.h. bei jeder beliebigen momentanen Schlauchbogenlänge der Schlauchbögen 5a, 5b, dadurch, dass er sich in dieser verkippten Lage der Schlauchführungsbox 1 mit seinem Bügelabschnitt 10a auf den jeweiligen Schlauchbogen 5a, 5b im Bereich von dessen Umkehrpunkt legt. Dadurch halten die Schlauchbögen 5a, 5b mit ihren Bogenumkehrbereichen 7a, 7b die Führungsgewichtsrollen 6a, 6b in ihrer vertikalen Lage in den Bogenumkehrbereichen 7a, 7b fest. Die Schlauchbögen 5a, 5b besitzen dazu die erforderliche Eigensteifigkeit und/oder stützen sich seitlich gegen die benachbarten Schmalseitenwände der Schlauchführungsbox 1 ab.

Somit werden bei dieser Blockierbügelrealisierung der Rollenblockiereinrichtung 8 die Führungsgewichtsrollen 6a, 6b in der boxeinwärtigen Endlage E_{E} festgehalten, wenn sie sich dort zum Zeitpunkt des Kippens der Schlauchführungsbox 1 befinden, d.h. die Rollenblockierstellung R_{B} ist dann gleich der boxeinwärtigen Endlage E_{E}. Falls die Schlauchführungsbox 1 bei teilweise oder ganz ausgezogenem Auszugsschlauch 5 gekippt wird, werden die Führungsgewichtsrollen 6a, 6b in ihrer entsprechend angehobenen momentanen Lage, die dann die Rollenblockierstellung R_{B} bildet, gegen Weiterbewegen in Boxauswärtsrichtung B_{A} gesperrt.

Die Fig. 7 bis 11 veranschaulichen alternative Ausführungsformen der Rollenblockiereinrichtung 8. Bei der in den Fig. 7 und 8 gezeigten Realisierung beinhaltet die Rollenblockiereinrichtung einen schwenkbeweglichen Schwenkhebel 18, der sich von einem boxauswärtigen Betätigungsende 18a an einer Bedienseite der Schlauchführungsbox 1 zu einem boxeinwärtigen Blockierabschnitt 18b erstreckt und zwischen einer in Fig. 7 gezeigten Blockierelement-Freigabestellung B_{F} und einer in Fig. 8 gezeigten Blockierelement-Blockierstellung B_{B} schwenkbeweglich ist. Im gezeigten Beispiel fungiert die offene Oberseite 1a der Schlauchführungsbox 1 als Bedienseite, und der Schwenkhebel 18 ist um eine in der Nähe des untersten Punktes der Schlauchführungsbox 1 gelegene Schwenkachse verschwenkbar.

Mit seinem Blockierabschnitt 18b greift der Schwenkhebel 18 in der Blockierelement-Blockierstellung B_{B} blockierend in einen Rollendrehachsen-Führungsweg F_{W} ein, der im gezeigten Beispiel durch die Vertikalführung 20 gegeben ist und allgemein den geführten Translationsweg bezeichnet, entlang dem sich die jeweilige Führungsgewichtsrolle 6a, 6b mit ihrer Rollendrehachse D_{R} translatorisch bewegt, wenn sich die Länge des zugeordneten Schlauchbogens 5a, 5b durch das Ausziehen und Einziehen des Auszugsschlauchs 5 verändert. Im gezeigten Beispiel weist der Schwenkhebel 18 hierfür in seinem Blockierabschnitt 18b eine Sperrnase 19 auf, die in der Blockierstellung B_{B} des Schwenkhebels 18 im Führungsweg F_{W} der Rollendrehachse D_{R} bzw. der Drehlagereinheit 11 liegt. Dadurch blockiert die Sperrnase 19 den Führungsweg F_{W} für die Führungsgewichtsrollen 6a, 6b, die sich folglich von einer gegenüber der Sperrnase 19 boxeinwärtigen Position in Boxauswärtsrichtung B_{A} nicht über die Sperrnase 19 hinaus bewegen können. Die Rollenblockierstellung R_{B} für die Führungsgewichtsrollen 6a, 6b ist folglich in diesem Beispiel durch die Lage der Sperrnase 19 bestimmt. In der Blockierelement-Freigabestellung B_{F} ist die Sperrnase 19 aus dem Rollendrehachsen-Führungsweg F_{W} herausgeschwenkt, so dass sich die Führungsgewichtsrollen 6a, 6b frei entlang des Rollendrehachsen-Führungsweges F_{W} bzw. der Vertikalführung 20 bewegen können.

In den Fig. 7 und 8 ist eine Ausführung gezeigt, bei der die Sperrnase 19 an einer Stelle des Schwenkhebels 18 vorgesehen ist, die zur Folge hat, dass die Rollenblockierstellung R_{B} gleich der boxeinwärtigen Endlage E_{E} ist oder sich von dieser allenfalls um ein geringfügiges Spiel entfernt befindet. In alternativen Ausführungen ist die Sperrnase an einer weiter in Boxauswärtsrichtung B_{A} gelegenen Stelle am Schwenkhebel 18 vorgesehen. In diesem Fall können sich dann die Führungsgewichtsrollen 6a, 6b in entsprechendem Maß aus ihrer boxeinwärtigen Endlage E_{E} bis zur Rollenblockierstellung R_{B} zwischen den beiden Endlagen E_{E} und E_{A} herausbewegen. In jedem Fall wird auch in diesen Realisierungen verhindert, dass die Führungsgewichtsrollen 6a, 6b bis zur boxauswärtigen Endlage E_{A} oder ganz aus der Schlauchführungsbox 1 heraus fallen können.

Am boxauswärtigen Betätigungsende 18a kann ein Benutzer an der zugänglichen Boxoberseite 1a den Schwenkhebel 18 betätigen, d.h. zwischen seiner Blockierstellung B_{B} und seiner Freigabestellung B_{F} verschwenken. Wenn die Schlauchführungsbox 1 wie gezeigt aus dem Boxhalterahmen 2 und dem in diesen einfügbaren Boxgehäuse 3 aufgebaut ist, kann der Schwenkhebel 18 optional ein lösbares, d.h. entriegelbares Demontage-Verriegelungselement für die Schlauchführungsbox 1 aufweisen. Wenn sich der Schwenkhebel 18 in seiner Blockierelement-Freigabestellung B_{F} befindet, verriegelt das Verriegelungselement das Boxgehäuse 3 im Boxhalterahmen 2, d.h. das Boxgehäuse 3 kann nicht vom Boxhalterahmen (2 abgenommen werden. Wenn sich der Schwenkhebel 18 in seiner Blockierelement-Blockierstellung B_{B} befindet, befindet sich das Demontage-Verriegelungselement in einer Entriegelungsstellung, in der es die Demontage des Boxgehäuses 3 vom Boxhalterahmen 2 freigibt. Auf diese Weise kann sichergestellt werden, dass sich die Rollenblockiereinrichtung 8 in ihrem Rollenblockierzustand befindet, wenn das Boxgehäuse 3 vom Boxhalterahmen 2 abgenommen wird.

Das Demontage-Verriegelungselement kann z.B. durch einen entsprechenden Verriegelungsbügel realisiert sein, der im Bereich des Betätigungsendes 18a am Schwenkhebel 18 ausgebildet ist. Der Verriegelungsbügel kann direkt auf den Boxhalterahmen 2 und das Boxgehäuse 3 wirken oder alternativ z.B. auf eine Haltebügelanordnung mit mindestens einem klappbeweglich an der Boxoberseite 1a am Boxgehäuse 3 angeordneten Haltebügel. Der Haltebügel kann seinerseits eine Demontagesicherung dergestalt aufweisen, dass er das Abnehmen des Boxgehäuses 3 vom Boxhalterahmen 2 blockiert, wenn er sich in einer parallel zur Boxoberseite 1a abgeklappten Stellung befindet, und die Demontage des Boxgehäuses 3 vom Boxhalterahmen 2 freigibt, wenn er sich in einem hochgeklappten Zustand befindet, in welchem er als Handhabe für das Abnehmen des Boxgehäuses 3 vom Boxhalterahmen 2 fungieren kann. Der Verriegelungsbügel des Schwenkhebels 18 blockiert in diesem Fall das Hochklappen des oder der Haltebügel, wenn sich der Schwenkhebel 18 in seiner Blockierelement-Freigabestellung B_{F} befindet. Sobald der Schwenkhebel 18 in seine Blockierstellung B_{B} verschwenkt wird, gibt sein Verriegelungsbügel das Hochklappen des oder der Haltebügel frei.

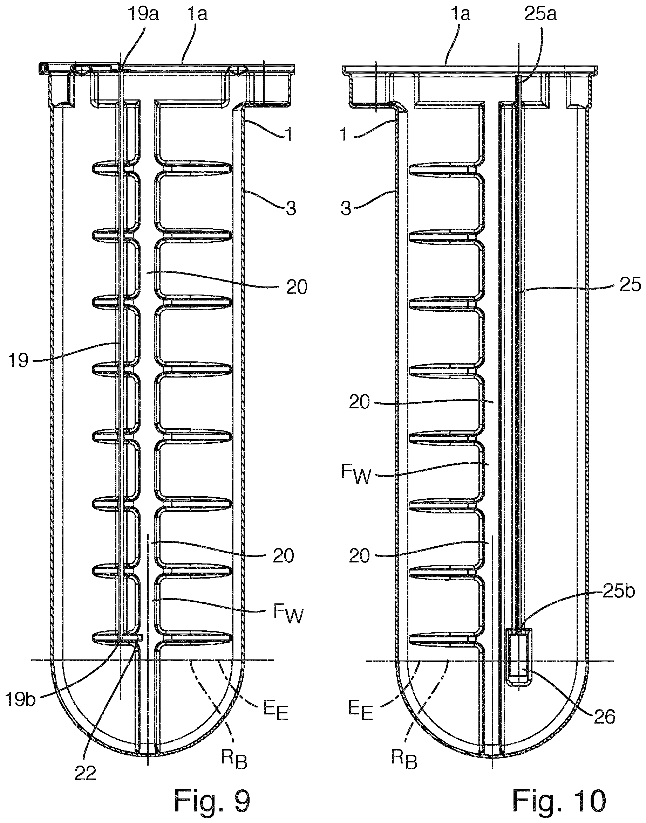

Bei der in Fig. 9 gezeigten Ausführung beinhaltet die Rollenblockiereinrichtung 8 einen drehbeweglichen Gewindersteuerstab 19 und ein von diesem zwischen einer Blockierelement-Freigabestellung B_{F} und einer Blockierelement-Blockierstellung B_{B} bewegbares Blockierelement, wobei es sich auch hier bei der Blockierelement-Freigabestellung B_{F} um diejenige handelt, bei der, in diesem Fall durch das Blockierelement, die Rollenblockiereinrichtung 8 im Rollenfreigabezustand ist, und die Blockierelement-Blockierstellung B_{B} diejenige ist, bei der sich die Rollenblockiereinrichtung 8 im Rollenblockierzustand befindet. Das Blockierelement ist in diesem Beispiel als Blockierbolzen 22 ausgeführt, der in der Blockierelement-Blockierstellung B_{B} blockierend in den Rollendrehachsen-Führungsweg F_{W} der Führungsgewichtsrollen 6a, 6b eingreift. Der Gewindesteuerstab 19 erstreckt sich von einem boxauswärtigen Betätigungsende 19a an einer Bedienseite, hier wiederum der Boxoberseite 1a, zu einem boxeinwärtigen Gewindeabschnitt 19b, mit dem das Blockierelement 22 zusammenwirkt.

Wenn der Benutzer den Gewindesteuerstab 19 an seinem Betätigungsende 19a dreht, wird der Blockierbolzen 22 quer zur Längsrichtung des Gewindesteuerstabs 19 in den Rollenachsen-Führungsweg F_{W} hinein bzw. aus diesem heraus bewegt. Dadurch wirkt das Blockierelement 22 in gleicher Weise wie die Sperrnase 19 des Schwenkhebels 18 in der Ausführung der Fig. 7 und 8. Und wie die Sperrnase 19 kann das Blockierelement 22 alternativ zu seiner in Fig. 9 gezeigten Lage, bei der es die Führungsgewichtsrollen 6a, 6b im Bereich von deren boxeinwärtiger Endlage E_{E} festhält, an einer anderen Stelle längs des Gewindesteuerstabs 19 bzw. des Rollendrehachsen-Führungswegs F_{W} angeordnet sein.

In einer in Fig. 10 veranschaulichten Realisierung beinhaltet die Rollenblockiereinrichtung 8 ähnlich wie im Beispiel der Fig. 9 einen drehbeweglichen Gewindesteuerstab 25, der sich von einem boxauswärtigen Betätigungsende 25a an einer Bedienseite der Schlauchführungsbox 1 zu einem boxeinwärtigen Gewindeabschnitt 25b erstreckt, und ein Blockierelement, das mit dem boxeinwärtigen Gewindeabschnitt 25b des Gewindesteuerstabs 25 zusammenwirkt und dadurch zwischen einer Blockierelement-Freigabestellung B_{F} und einer Blockierelement-Blockierstellung B_{B} bewegbar ist. In diesem Ausführungsbeispiel ist das Blockierelement durch einen Blockierklotz 26 gebildet, der sich in der Blockierelement-Blockierstellung B_{B} blockierend gegen eine Rollenfläche der Führungsgewichtsrollen 6a, 6b anlegt. Somit sperrt die Rollenblockiereinrichtung 8 in diesem Fall die Führungsgewichtsrollen 6a, 6b gegenüber einem Wegbewegen längs des Rollendrehachsen-Führungsweges F_{W} nicht dadurch, dass sie diesen Führungsweg F_{W} blockiert, sondern dadurch, dass der Blockierklotz 26 gegen die Rollenfläche der Führungsgewichtsrolle 6a, 6b andrückt und damit die Führungsgewichtsrollen 6a, 6b selbst aufgrund entsprechender mechanischer Klemmung festhält. Beispielweise kann sich der Blockierklotz 16 in entsprechenden Ausführungen seitlich gegen die axiale Außenseite der benachbarten Führungsgewichtsrolle 6a, 6b anlegen. Auch bei dieser Ausführung kann die Position des Blockierklotzes 26 längs der Boxeinwärtsrichtung B_{E} bzw. der Boxauswärtsrichtung B_{A} variabel gewählt werden. In der gezeigten Lage sichert der Blockierklotz 26 die Führungsgewichtsrollen 6a, 6b wiederum im Bereich von deren boxeinwärtiger Endlage E_{E}. Bei Drehen des Gewindesteuerstabs 25 an seinem Betätigungsende 25a durch den Benutzer bewegt sich der Blockierklotz 26 wiederum quer zur Längsrichtung des Gewindesteuerstabs 25, in diesem Fall jedoch in einer Ebene parallel zur Rollendrehachse D_{R}. Dies kann z.B. dadurch realisiert sein, dass der Blockierklotz 26 aus zwei Klotzhälften bzw. Klotzplatten aufgebaut ist, die über eine Schrägflächenkopplung gegeneinander beweglich sind.

Bei einer in Fig. 11 gezeigten Realisierung beinhaltet die Rollenblockiereinrichtung einen axialbeweglichen Steuerstab 27 und ein von diesem zwischen einer Blockierelement-Freigabestellung B_{F} und einer Blockierelement-Blockierstellung B_{B} bewegbares Blockierelement. Im gezeigten Ausführungsbeispiel ist das Blockierelement von einem Federzungenelement 28 gebildet, das in der Schlauchführungsbox 1 bzw. dem Boxgehäuse 3 in seine Blockierstellung vorgespannt gehalten ist. Der Steuerstab 27 erstreckt sich von einem boxauswärtigen Betätigungsende 27a an einer Bedienseite der Schlauchführungsbox 1 zu einem boxeinwärtigen Steuerabschnitt 27b, mit dem das Federzungenelement 28 zusammenwirkt, wobei es in der gezeigten Blockierelement-Blockierstellung B_{B} blockierend in den Rollendrehachsen-Führungsweg F_{W} der Führungsgewichtsrollen 6a, 6b eingreift.

Durch axiales Betätigen des Steuerstabs 27 kann der Benutzer das Federzungenelement 28 zwischen seiner Freigabestellung und seiner Blockierstellung bewegen. Wenn der Steuerstab 27 vom Benutzer axial vorgeschoben wird, d.h. in Fig. 11 nach unten, drückt der Steuerstab 27 mit seinem boxeinwärtigen Steuerabschnitt 27b das Federzungenelement 29 entgegen seiner Federkraft in Fig. 11 nach schräg unten aus dem Rollendrehachsen-Führungsweg F_{W} hinaus in seine Blockierelement-Freigabestellung B_{F}. Entsprechend ist der Führungsweg F_{W} dann für die Führungsgewichtsrollen 6a, 6b bzw. deren Rollendrehachse D_{R} freigegeben, die Führungsgewichtsrollen 6a, 6b sind wieder entsperrt. Auch bei dieser Ausführung kann das Federzungenelement 28 je nach Wunsch an einer beliebigen Stelle längs des Rollendrehachsen-Führungsweges F_{W} angeordnet sein, an welcher die Sperrung für die Führungsgewichtsrollen 6a, 6b bewirkt werden soll.

Wie die gezeigten und die weiteren oben erläuterten Ausführungsbeispiele deutlich machen, stellt die Erfindung in sehr vorteilhafter Weise eine Auszugsschlauchführungsvorrichtung zur Verfügung, mit der die Schlauchbögen eines Auszugsschlauchs in einer Schlauchführungsbox unter Verwendung einer Führungsgewichtsrollenanordnung geführt werden können und die Führungsgewichtsrollenanordnung in eine Blockierstellung versetzt werden kann, die ein Herausfallen einer oder mehrerer Führungsgewichtsrollen aus der Schlauchführungsbox oder eine unerwünscht große Translationsbeweglichkeit derselben innerhalb der Schlauchführungsbox verhindert. Diese Auszugschlauchführungsvorrichtung lässt sich überall dort verwenden, wo Bedarf daran besteht, einen Auszugsschlauch mit einem oder mehreren Schlauchbögen kontrolliert führen zu können, insbesondere für Sanitärbrausen, aber auch für nicht-sanitäre Brausen und weiteren sanitäre und nicht-sanitäre Anwendungen.

## Patentansprüche

1. Auszugsschlauchführungsvorrichtung zur Führung eines Auszugsschlauchs mit wenigstens einem Schlauchbogen variabler Schlauchbogenlänge, insbesondere eines Auszugsschlauchs einer Sanitärbrause, mit
- einer Schlauchführungsbox (1), die zum verdrehgesicherten Aufnehmen des Schlauchbogens in einer boxeinwärts durchhängenden Lage eingerichtet ist, und
- einer Führungsgewichtsrollenanordnung (6) mit wenigstens einer Führungsgewichtsrolle (6a), die um eine Rollendrehachse (D_{R}) drehbeweglich in einen Bogenumkehrbereich des Schlauchbogens einlegbar ist, wobei die Führungsgewichtsrolle (6a) mit ihrer Rollendrehachse (D_{R}) in einer Schlauchbogenlängenrichtung (L_{S}) mit abnehmender Schlauchbogenlänge boxauswärts und mit zunehmender Schlauchbogenlänge boxeinwärts translationsbeweglich ist, **gekennzeichnet durch**
- eine Rollenblockiereinrichtung (8), die in einem Rollenfreigabezustand die Führungsgewichtsrolle (6a) in ihrer Translationsbewegung freigibt und in einem Rollenblockierzustand die Führungsgewichtsrolle (6a) gegen Weiterbewegen wenigstens in einer Boxauswärtsrichtung (B_{A}) über eine Rollenblockierstellung (R_{B}) hinaus sperrt, wobei die Rollenblockierstellung (R_{B}) von einer boxauswärtigen Endlage (E_{A}) der Führungsgewichtsrolle (6a), die mit einer minimalen Schlauchbogenlänge korrespondiert, boxeinwärts beabstandet ist.

2. Auszugsschlauchführungsvorrichtung nach Anspruch 1, weiter **dadurch gekennzeichnet, dass** die Rollenblockierstellung (R_{B}) eine boxeinwärtige Endlage (E_{E}) der Führungsgewichtsrolle (6a) ist oder einen Abstand von der boxeinwärtigen Endlage (E_{E}) besitzt, der höchstens so groß wie der halbe Abstand der boxeinwärtigen Endlage (E_{E}) von der boxauswärtigen Endlage (E_{A}) der Führungsgewichtsrolle (6a) ist.

3. Auszugsschlauchführungsvorrichtung nach Anspruch 1 oder 2, weiter **dadurch gekennzeichnet, dass** die Rollenblockiereinrichtung (8) einen Blockierbügel (10) aufweist, der einerseits mit der Rollendrehachse (D_{R}) translationsfest gekoppelt ist und andererseits einen Bügelabschnitt (10a) zum unterseitigen Hintergreifen des Schlauchbogens in seinem Bogenumkehrbereich aufweist.

4. Auszugsschlauchführungsvorrichtung nach Anspruch 3, weiter **dadurch gekennzeichnet, dass** eine Mehrzahl von Führungsgewichtsrollen (6a, 6b) für eine entsprechende Mehrzahl von Schlauchbögen des Auszugsschlauchs vorgesehen ist und der Blockierbügel (10) mit seinem Bügelabschnitt (10a) zum unterseitigen Hintergreifen mehrerer der Schlauchbögen in deren Bogenumkehrbereich eingerichtet ist.

5. Auszugsschlauchführungsvorrichtung nach Anspruch 4, weiter **dadurch gekennzeichnet, dass** für mindestens zwei der Führungsgewichtsrollen (6a, 6b) eine gemeinsame Drehlagereinheit (11) vorgesehen ist und der Blockierbügel (10) einen mit einem Endbereich (13a) an die Drehlagereinheit (11) gekoppelten Mittelstegabschnitt (10b), der sich zwischen zwei dieser mindestens zwei Führungsgewichtsrollen (6a, 6b) erstreckt, und als Bügelabschnitt (10a) zwei an einem anderen Endbereich (13b) des Mittelstegabschnitts (10b) entgegengesetzt abstehende Bügelteilabschnitte (14a, 14b) aufweist.

6. Auszugsschlauchführungsvorrichtung nach Anspruch 1 oder 2, weiter **dadurch gekennzeichnet, dass**
- die Rollenblockiereinrichtung (8) einen schwenkbeweglichen Schwenkhebel (18) aufweist, der sich von einem boxauswärtigen Betätigungsende (18a) an einer Bedienseite der Schlauchführungsbox (1) zu einem boxeinwärtigen Blockierabschnitt (18b) erstreckt und zwischen einer Blockierelement-Freigabestellung (B_{F}) und einer Blockierelement-Blockierstellung (B_{B}) schwenkbeweglich ist,
- wobei der Schwenkhebel (18) in der Blockierelement-Blockierstellung (B_{B}) mit seinem Blockierabschnitt (18b) blockierend in einen Rollendrehachsen-Führungsweg (F_{W}) der Führungsgewichtsrolle (6a) eingreift.

7. Auszugsschlauchführungsvorrichtung nach Anspruch 1 oder 2, weiter **dadurch gekennzeichnet, dass**
- die Rollenblockiereinrichtung (8) einen drehbeweglichen Gewindesteuerstab (19, 25) und ein von diesem zwischen einer Blockierelement-Freigabestellung (B_{F}) und einer Blockierelement-Blockierstellung (B_{B}) bewegbares Blockierelement (22, 26) aufweist,
- wobei sich der Gewindesteuerstab (19, 25) von einem boxauswärtigen Betätigungsende (19a, 25a) an einer Bedienseite der Schlauchführungsbox (1) zu einem boxeinwärtigen Gewindeabschnitt (19b, 25b) erstreckt und das Blockierelement (22, 26) mit dem boxeinwärtigen Gewindeabschnitt (19b, 25b) des Gewindesteuerstabs (19, 25) zusammenwirkt.

8. Auszugsschlauchführungsvorrichtung nach Anspruch 7, weiter **dadurch gekennzeichnet, dass**
- das Blockierelement (22, 26) einen Blockierbolzen (22) aufweist, der in der Blockierelement-Blockierstellung (B_{B}) blockierend in einen Rollendrehachsen-Führungsweg (F_{W}) der Führungsgewichtsrolle (6a) eingreift, oder
- das Blockierelement (22, 26) einen Blockierklotz (26) aufweist, der sich in der Blockierelement-Blockierstellung (B_{B}) blockierend gegen eine Rollenfläche der Führungsgewichtsrolle (6a) anlegt.

9. Auszugsschlauchführungsvorrichtung nach Anspruch 1 oder 2, weiter **dadurch gekennzeichnet, dass**
- die Rollenblockiereinrichtung (8) einen axialbeweglichen Steuerstab (27) und ein von diesem zwischen einer Blockierelement-Freigabestellung und einer Blockierelement-Blockierstellung bewegbares Blockierelement (28) aufweist,
- wobei sich der Steuerstab (27) von einem boxauswärtigen Betätigungsende (27a) an einer Bedienseite der Schlauchführungsbox (1) zu einem boxeinwärtigen Steuerabschnitt (27b) erstreckt und das Blockierelement (28) mit dem boxeinwärtigen Steuerabschnitt (27b) des Steuerstabs (27) zusammenwirkt und in der Blockierelement-Blockierstellung blockierend in einen Rollendrehachsen-Führungsweg (F_{W}) der Führungsgewichtsrolle (6a) eingreift.

10. Sanitärbrause mit
- einer Brausekopfeinheit (12) und
- einem Auszugsschlauch (5), an den die Brausekopfeinheit (12) angekoppelt ist, **gekennzeichnet durch**
- eine Auszugsschlauchführungsvorrichtung nach einem der Ansprüche 1 bis 9 zur Führung des Auszugsschlauchs (5).

## Claims

1. Pull-out hose guiding device for guiding a pull-out hose having at least one hose bend of variable hose bend length, preferably a pull-out hose of a sanitary shower, comprising
- a hose guiding box (1) configured for accommodating the hose bend in an anti-twist manner in a box-inwards hanging position, and
- a guide weight roller arrangement (6) including at least one guide weight roller (6a) which is insertable into a bend reversion zone of the hose bend for rotary motion about a roller rotational axis (D_{R}), wherein the guide weight roller (6a) with its roller rotational axis (D_{R}) is capable of translational motion in a hose bend lengthwise direction (Ls) box-outwards with decreasing hose bend length and box-inwards with increasing hose bend length,
**characterized by**
- a roller blocking device (8) which releases the guide weight roller (6a) in its translational motion in a roller release condition and blocks the guide weight roller against further movement at least in a box-outwards direction (B_{A}) beyond a roller blocking position (R_{B}) in a roller blocking condition, wherein the roller blocking position (R_{B}) is spaced box-inwards from a box-outwards end position (E_{A}) of the guide weight roller (6a), said box-outwards end position corresponding to a minimum hose bend length.

2. Pull-out hose guiding device according to claim 1, further **characterized in that** the roller blocking position (R_{B}) is a box-inwards end position (E_{E}) of the guide weight roller (6a) or has a distance from the box-inwards end position (E_{E}) that is at most as great as half the distance of the box-inwards end position (E_{E}) from the box-outwards end position (E_{A}) of the guide weight roller (6a).

3. Pull-out hose guiding device according to claim 1 or 2, further **characterized in that** the roller blocking device (8) comprises a blocking bracket (10) which on one hand is coupled with the roller rotational axis (D_{R}) for conjoint translational motion and on the other hand has a bracket section (10a) for engaging behind the hose bend in its bend reversion zone on a lower side thereof.

4. Pull-out hose guiding device according to claim 3, further **characterized in that** a plurality of guide weight rollers (6a, 6b) for a corresponding plurality of hose bends of the pull-out hose is provided and the blocking bracket (10) and its bracket section (10a) are configured for engaging behind a plurality of the hose bends in their bend reversion zones on a lower side thereof.

5. Pull-out hose guiding device according to claim 4, further **characterized in that** for at least two of the guide weight rollers a common rotation bearing unit (11) is provided and the blocking bracket comprises a central web section (10b) coupled to the rotation bearing unit (11) with an end region (13a), which central web section extends between two of said at least two guide weight rollers (6a, 6b), and comprises as said bracket section (10a) two bracket subsections (14a, 14b) protruding in opposite directions on another end region (13b) of the central web section (10b).

6. Pull-out hose guiding device according to claim 1 or 2, further **characterized in that**
- the roller blocking device (8) includes a pivotable pivot lever (18) which extends from a box-outwards actuating end ,(18a) on an operating side of the hose guiding box (1) to a box-inwards blocking section (18b) and is pivotable between a blocking element release position (B_{F}) and a blocking element blocking position (B_{B}),
- wherein the blocking section (18b) of the pivot lever (18) in the blocking element blocking position engages in a blocking manner in a roller rotational axis guiding path (Fw) of the guide weight roller (6a).

7. Pull-out hose guiding device according to claim 1 or 2, further **characterized in that**
- the roller blocking device includes a rotatable threaded control rod (19, 25) and a blocking element (22, 26) movable by said rod between a blocking element release position (B_{F}) and a blocking element blocking position (B_{B}),
- wherein the threaded control rod (19, 25) extends from a box-outwards actuating end (19a, 25a) on an operating side of the hose guiding box (1) to a box-inwards threaded section (19b, 25b) and the blocking element (22, 26) cooperates with the box-inwards threaded section (19b, 25b) of the threaded control rod (19, 25).

8. Pull-out hose guiding device according to claim 7, further **characterized in that**
- the blocking element (22, 26) comprises a blocking bolt (22) which, in the blocking element blocking position (B_{B}), engages in a blocking manner in a roller rotational axis guiding path (Fw) of the guide weight roller (6a), or
- the blocking element (22, 26) comprises a blocking log (26) which, in the blocking element blocking position (B_{B}), abuts in a blocking manner against a roller surface of the guide weight roller (6a).

9. Pull-out hose guiding device according to claim 1 or 2, further **characterized in that**
- the roller blocking device (8) comprises an axially movable control rod (27) and a blocking element (28) movable by said rod between a blocking element release position and a blocking element blocking position,
- wherein the control rod (27) extends from a box-outwards actuating end (27a) on an operating side of the hose guiding box (1) to a box-inwards control section (27b) and the blocking element (28) cooperates with the box-inwards control section (27b) of the control rod (27) and, in the blocking element blocking position, engages in a blocking manner in a roller rotational axis guiding path (Fw) of the guide weight roller (6a).

10. Sanitary shower, comprising
- a shower head unit (12) and
- a pull-out hose (5) to which the shower head unit (12) is coupled, **characterized by**
- a pull-out hose guiding device according to any one of claims 1 to 9 for guiding the pull-out hose (5).

## Revendications

1. Dispositif de guidage de tuyau extractible pour guider un tuyau extractible présentant au moins un coude de tuyau de longueur variable, en particulier un tuyau extractible d'une douche sanitaire, comportant
- une boîte de guidage de tuyau (1) qui est conçue pour recevoir le coude de tuyau dans une position suspendue vers l'intérieur de la boîte, de manière à l'empêcher de se tordre, et
- un dispositif à rouleau de guidage lesté (6) comprenant au moins un rouleau de guidage lesté (6a) qui peut être inséré dans une zone d'inversion du coude de tuyau de manière à pouvoir tourner autour d'un axe de rotation de rouleau (D_{R}), le rouleau de guidage lesté (6a) pouvant être déplacé en translation avec son axe de rotation de rouleau (D_{R}) dans une direction longitudinale de coude de tuyau (Ls) vers l'extérieur de la boîte, avec diminution de la longueur de coude de tuyau, et vers l'intérieur de la boîte, avec augmentation de la longueur de coude de tuyau,
**caractérisé par**
- un organe de blocage de rouleau (8) qui, dans un état de libération de rouleau, libère le rouleau de guidage lesté (6a) dans son mouvement de translation et qui, dans un état de blocage de rouleau, bloque le rouleau de guidage lesté (6a) à l'encontre d'une poursuite du mouvement au moins dans une direction de sortie de boîte (B_{A}) au-delà d'une position de blocage de rouleau (R_{B}), la position de blocage de rouleau (R_{B}) étant espacée, vers l'intérieur de la boîte, d'une position de fin de course de sortie (E_{A}) du rouleau de guidage lesté (6a), laquelle correspond à une longueur minimale du coude de tuyau.

2. Dispositif de guidage de tuyau extractible selon la revendication 1, **caractérisé en outre en ce que** la position de blocage de rouleau (R_{B}) est une position de fin de course d'entrée (E_{E}) du rouleau de guidage lesté (6a) ou présente une distance par rapport à la position de fin de course d'entrée (E_{E}) qui est au plus égale à la moitié de la distance entre la position de fin de course d'entrée (E_{E}) et la position de fin de course de sortie (E_{A}) du rouleau de guidage lesté (6a).

3. Dispositif de guidage de tuyau extractible selon la revendication 1 ou 2, **caractérisé en outre en ce que** l'organe de blocage de rouleau (8) comprend un étrier de blocage (10) qui, d'une part, est couplé solidairement en translation à l'axe de rotation de rouleau (D_{R}) et, d'autre part, comprend une portion d'étrier (10a) pour engager par l'arrière le coude de tuyau depuis le bas dans la zone d'inversion du coude.

4. Dispositif de guidage de tuyau extractible selon la revendication 3, **caractérisé en outre en ce qu'**il est prévu une pluralité de rouleaux de guidage lesté (6a, 6b) pour une pluralité correspondante de coudes du tuyau extractible, et **en ce que** l'étrier de blocage (10) est conçu de manière à engager par l'arrière, au moyen de sa portion d'étrier (10a), plusieurs desdits coudes de tuyau depuis le bas dans leur zone d'inversion.

5. Dispositif de guidage de tuyau extractible selon la revendication 4, **caractérisé en outre en ce qu'**il est prévu un ensemble de palier rotatif (11) commun pour au moins deux desdits rouleaux de guidage lesté (6a, 6b), et l'étrier de blocage (10) comprend une partie d'âme centrale (10b) dont une zone d'extrémité (13a) est couplée à l'ensemble de palier rotatif (11) et qui s'étend entre deux desdits au moins deux rouleaux de guidage lesté (6a, 6b), et ledit étrier comprend comme portion d'étrier (10a) deux portions d'étrier partielles (14a, 14b) qui font saillie en sens opposés à partir d'une autre zone d'extrémité (13b) de la partie d'âme centrale (10b).

6. Dispositif de guidage de tuyau extractible selon la revendication 1 ou 2, **caractérisé en outre en ce que**
- ledit organe de blocage de rouleau (8) comprend un levier pivotant (18) mobile en pivotement qui s'étend depuis une extrémité d'actionnement (18a), située vers l'extérieur de la boîte sur un côté de manœuvre de ladite boîte de guidage de tuyau (1), jusqu'à une portion de blocage (18b) située vers l'intérieur de la boîte, et qui est mobile en pivotement entre une position de libération d'élément de blocage (B_{F}) et une position de blocage d'élément de blocage (B_{B}),
- dans la position de blocage d'élément de blocage (B_{B}), le levier pivotant (18) s'engage avec sa portion de blocage (18b) dans un chemin de guidage (Fw) de l'axe de rotation du rouleau de guidage lesté (6a) de manière à le bloquer.

7. Dispositif de guidage de tuyau extractible selon la revendication 1 ou 2, **caractérisé en outre en ce que**
- l'organe de blocage de rouleau (8) comprend une tige de commande filetée (19, 25) mobile en rotation et un élément de blocage (22, 26) déplaçable par ladite tige entre une position de libération d'élément de blocage (B_{F}) et une position de blocage d'élément de blocage (B_{B}),
- la tige de commande filetée (19, 25) s'étend depuis une extrémité d'actionnement (19a, 25a) située vers l'extérieur de la boîte sur un côté de manœuvre de la boîte de guidage de tuyau (1), jusqu'à une portion filetée (19b, 25b) située vers l'intérieur de la boîte, et l'élément de blocage (22, 26) coopère avec la portion filetée (19b, 25b), située vers l'intérieur de la boîte, de la tige de commande filetée (19, 25).

8. Dispositif de guidage de tuyau extractible selon la revendication 7, **caractérisé en outre en ce que**
- l'élément de blocage (22, 26) comprend un goujon de blocage (22) qui, dans la position de blocage d'élément de blocage (B_{B}), s'engage dans un chemin de guidage (Fw) de l'axe de rotation du rouleau de guidage lesté (6a) de manière à le bloquer, ou
- l'élément de blocage (22, 26) comprend un plot de blocage (26) qui, dans la position de blocage d'élément de blocage (B_{B}), s'appuie contre une surface de roulement du rouleau de guidage lesté (6a) de manière à le bloquer.

9. Dispositif de guidage de tuyau extractible selon la revendication 1 ou 2, **caractérisé en outre en ce que**
- l'organe de blocage de rouleau (8) comprend une tige de commande (27) mobile axialement et un élément de blocage (28) déplaçable par ladite tige entre une position de libération d'élément de blocage et une position de blocage d'élément de blocage,
- la tige de commande (27) s'étend depuis une extrémité d'actionnement (27a) située vers l'extérieur de la boîte sur un côté de manœuvre de la boîte de guidage de tuyau (1), jusqu'à une portion de commande (27b) située vers l'intérieur de la boîte, et l'élément de blocage (28) coopère avec la portion de commande (27b), située vers l'intérieur de la boîte, de la tige de commande (27) et, dans la position de blocage d'élément de blocage, s'engage dans un chemin de guidage (Fw) de l'axe de rotation du rouleau de guidage lesté (6a) de manière à le bloquer.

10. Douche sanitaire comportant
- un ensemble formant pomme de douche (12), et
- un tuyau extractible (5) auquel est couplé l'ensemble formant pomme de douche (12),
**caractérisée par**
- un dispositif de guidage de tuyau extractible selon l'une des revendications 1 à 9 pour guider le tuyau extractible (5).
